Europäisches Patentamt

European Patent Office

Office européen des brevets

(11) Publication number: **0 103 658**
**B1**

(12) **EUROPEAN PATENT SPECIFICATION**

(45) Date of publication of patent specification: **09.07.86**

(51) Int. Cl.⁴: **H 01 M 6/46,** H 01 M 4/06

(21) Application number: **82304884.8**

(22) Date of filing: **16.09.82**

(54) A layered dry-cell battery.

(43) Date of publication of application:
**28.03.84 Bulletin 84/13**

(45) Publication of the grant of the patent:
**09.07.86 Bulletin 86/28**

(84) Designated Contracting States:
**AT BE CH DE FR GB IT LI LU NL SE**

(56) References cited:
**FR-A-1 400 194**
**GB-A- 774 151**
**US-A-2 536 697**
**US-A-2 658 936**
**US-A-4 118 860**

**PATENTS ABSTRACTS OF JAPAN, vol. 5, no.
30 (E-47),(702), February 24, 1981.**

(73) Proprietor: **Kan-Cheung, Lo
293A Prince Edward Road 9th Floor
Kowloon (HK)**

(72) Inventor: **Kan-Cheung, Lo
293A Prince Edward Road 9th Floor
Kowloon (HK)**

(74) Representative: **Wisher, Michael Frederick et al
Urquhart-Dykes & Lord 47 Marylebone Lane
London W1M 6DL (GB)**

## Description

### Introduction

This invention relates to a layered dry-cell battery and more particularly to a battery having a plurality of dry cell units stacked one over another to form a series connection, each dry cell unit having a composite positive electrode formed into a tablet shape whose side or sides are enclosed with a water-proof and acid-resisting lining.

### Brief Description of Prior Art

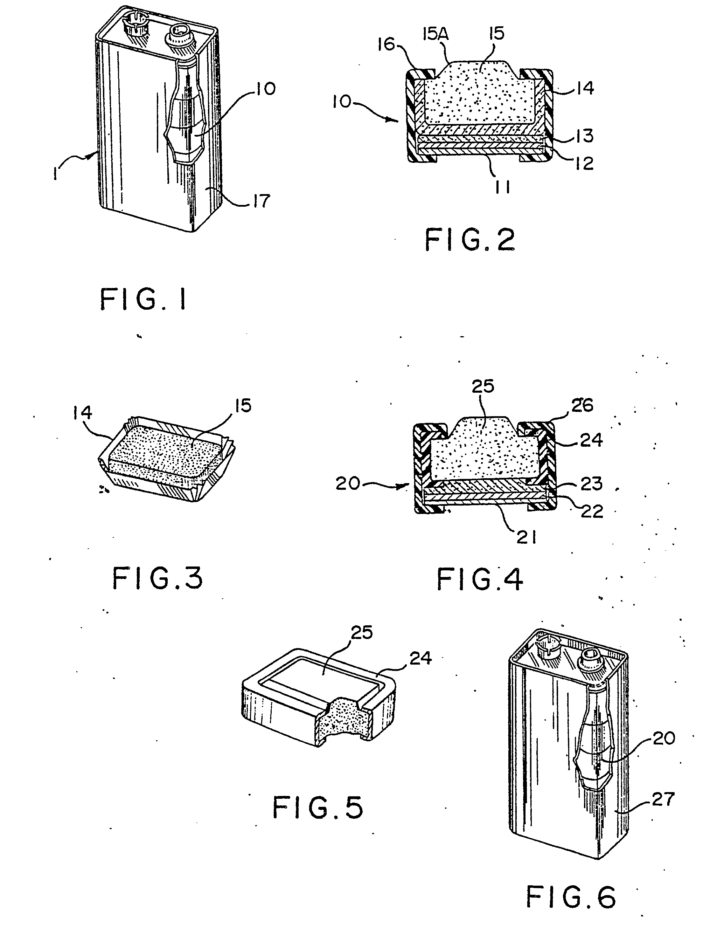

Conventional layered dry-cell batteries are generally composed of a plurality of dry cell units stacked one over another and packed in a casing. A typical example is shown in Figure 1, wherein 1 is the complete layered battery, 10 is one of the dry cell units and 17 is a casing in which the dry cell units 10 are packed.

A conventional dry cell unit 10, as shown in Fig. 2, is composed of a rectangular, composite positive electrode 15 containing manganese dioxide, a paper casing 14 which covers the bottom surface and the side surfaces of the composite positive electrode 15 (as also shown in Fig. 3), a paper sheet 13 to abut the bottom surface of paper casing 14, a negative electrode 12 consisting of a zinc sheet to abut paper sheet 13, and a carbon film 11 to abut negative electrode 12 so that composite positive electrode 15, paper casing 14, paper sheet 13, negative electrode (zinc sheet) 12 and carbon film 11 constitute a laminate which is further enclosed with a heat-shrinkable plastics shielding material or case 16 that leaves the central area of the top surface of composite positive electrode 15 and the central area of the lower surface of carbon film 11 exposed. When assembling composite positive electrode 15, paper casing 14 and paper sheet 13, a suitable quantity of electrolyte such as an aqueous acid solution is added so as to soak paper casing 14 and paper sheet 13 with the aqueous acid solution, and therefore a voltage is generated between composite electrode 15 and zinc sheet negative electrode 17. When a plurality of the cell units are stacked one over another, that is, connected in a series, a voltage is provided equivalent to the sum of the voltages generated by each individual cell unit.

In such a conventional cell unit as described above paper casing 14, which covers the bottom surface and sides of composite positive electrode 15, tends to expand after being soaked with electrolyte. Therefore, a large space at the bottom and around the composite positive electrode is occupied by the paper casing. As a result, a large portion of the space within the casing of a completed layered battery is not effectively utilized.

### Object of the Invention

It is a primary object of this invention to provide an improved battery of which the capacity, or the ampere-hour rating, is increased over conventional layered dry-cell batteries.

### Summary of the Invention

In view of aforesaid problem with conventional batteries, this invention provides an improved layered dry-cell battery having a plurality of dry-cell units stacked one on top of another to form a series connection, said dry-cell units each comprising:

a positive electrode which includes an electrolyte formed into a shape having a top surface, a bottom surface and at least one side;

a water-proof and acid resistant lining enclosing the side or sides of the positive electrode and leaving exposed central areas of the top and bottom surfaces of the positive electrode;

a paper sheet abutting the bottom surface of the positive electrode;

a negative electrode in sheet form abutting the paper sheet;

a carbon film having an upper surface abutting the negative electrode and a lower surface; and

a plastics case retaining the positive electrode the lining, the paper sheet, the negative electrode and the carbon film as a laminate with the central area of the top surface of the positive electrode and the central area of the lower surface of the carbon film exposed.

### Brief Description of the Drawings

Fig. 1 is a perspective view of a conventional layered dry-cell battery, partially in section to show its internal arrangement.

Fig. 2 is an enlarged cross-sectional view of a dry cell unit of a conventional battery.

Fig. 3 is a perspective view of a composite positive electrode being wrapped in a paper case according to a conventional construction.

Fig. 4 is an enlarged cross-sectional view of a dry cell unit employed in the battery of this invention.

Fig. 5 is a perspective view of a composite positive electrode being enclosed with a plastics sheet material or case partially in section to show its configuration.

Fig. 6 is a perspective view of a complete battery of this invention, partially in section.

### Detailed Description of the Invention

This invention provides a layered dry-cell battery having a plurality of dry cell units 20 as shown in Figs. 4 and 6. The dry cell units 20 are to be stacked one over another and packed in a casing in a similar manner to a conventional layered battery shown in Fig. 1.

As shown in Fig. 4, the dry cell unit 20 according to this invention comprises a composite positive electrode 25 which is composed of a mixture of manganese dioxide, ammoniumchloride, acetylene black, graphite powder and an electrolyte containing an aqueous acid solution as a binder, the mixture being compressed and formed into a tablet shape; lining 24, which is made of waterproof and acid-resisting material such as heat-shrinkable plastics, adapted to enclose the side or sides of tablet-shaped composite positive electrode 25 so as to leave the central area of the top and bottom surfaces exposed; a paper sheet 23 soaked with an aqueous acid solution to abut the exposed bottom surface of tablet-shaped composite positive electrode 25; a negative electrode 22 consisting of a zinc sheet to abut paper sheet 23; a carbon film 21 to abut negative electrode 22 so as to form a laminated construction, the laminate being provided with a heat shrinkable plastics shielding material or case 26 around the side or sides thereof as shown in Fig. 4.

Lining 24 is so disposed as to surround the side or sides of the tablet-shaped composite positive electrode 25 and then heated to shrink, as shown in Fig. 5, so as to enclose all the sides and corners of the tablet shaped composite positive electrode 25 leaving the central area of its top and bottom surfaces exposed. Heat shrinkable plastics shielding material or case 26 is disposed in the same manner around the laminate of tablet-shaped composite positive electrode 25 having lining 24 surrounding its sides, paper sheet 23, negative electrode 22 and carbon film 21, as shown in Fig. 4, leaving the central area of the top surface of the composite positive electrode and the lower surface of the carbon film exposed.

The central part of the top surface of tablet-shaped composite positive electrode 25 is slightly elevated, as shown in Fig. 4. The elevated top surface assures a good contact engagement with the upper surface of composite positive electrode 25 of one cell unit and the lower surface of carbon film 21 of another cell unit when they are stacked one over the other and packed in casing 27 as shown in Fig. 6.

Because lining 24 is made of water-proof and acid-resistant material such as heat shrinkable plastics, which will not expand after contact with electrolyte containing an aqueous acid solution, no extra space in casing 27 will be occupied by lining 24. As a result, the space within casing 27 can be effectively utilized or allocated, to enlarge the size or volume of composite positive electrode on which size the capacity, or the ampere-hour rating, of a complete layered battery depends.

**Claims**

1. A layered dry-cell battery having a plurality of dry cell units (20) stacked one on top of another to form a series connection, said dry-cell units each comprising:

a positive electrode (25) which includes an electrolyte formed into a shape having a top surface, a bottom surface and at least one side;

a water. proof and acid resistanct lining (24) enclosing the side or sides of the positive electrode and leaving exposed central areas of the top and bottom surfaces of the positive electrode;

a paper sheet (23) abutting the bottom surface of the positive electrode (25);

a negative electrode (22) in sheet form abutting the paper sheet (23);

a carbon film (21) having an upper surface abutting the negative electrode and a lower surface; and

a plastics case (26) retaining the positive electrode (25), the lining (24), the paper sheet (23), the negative electrode (22) and the carbon film (21) as a laminate with the central area of the top surface of the positive electrode (25) and the central area of the lower surface of the carbon film (21) exposed.

2. A layered dry-cell battery as claimed in claim 1 characterised in that said positive electrode (25) is a composite composed of a mixture comprising manganese dioxide, ammonium chloride, acetylene black, graphite and an electrolyte containing an aqueous acid solution, said mixture being compressed and formed into a tablet shape having a top surface and a bottom surface, and side edges;

the negative electrode (22) consists of a zinc sheet; and in that the plastics shielding case (26) is heat shrunk into its position.

3. A layered dry-cell battery as claimed in claim 1 or claim 2, wherein said water-proof and acid resistant lining (24) is a heat shrinkable plastics lining.

**Revendications**

1. Pile sèche stratifiée comportant une série d'unités cellulaires sèches (20), empilées les unes sur les autres et reliées en série, lesdites unités cellulaires sèches comprenant chacune:

— une électrode positive (25) qui comprend un électrolyte revêtant une forme ayant une surface supérieure, une surface intérieure et au moins une surface latérale;

— un chemisage étanche à l'eau et résistant aux acides (24) englobant la ou les paroi(s) latérale(s) de l'électrode positive et laissant exposées les zones centrales des surfaces supérieure et inférieure de l'électrode positive;

— une feuille de papier (23) en contact avec la surface inférieure de l'électrode positive (25);

— une électrode négative (22) sous forme de feuille en contact avec la feuille de papier (23);

— un film de carbone (21) ayant une surface supérieure en contact avec l'électrode négative et une surface inférieure; et

— un boîtier en matière plastique (26) renfermant l'électrode positive (25), le chemisage (24), la feuille de papier (23), l'électrode négative (22) et le film de carbone (21) sous la forme d'un stratifié en laissant exposées la zone centrale de la surface supérieure de l'électrode positive (25) et la zone centrale de la surface inférieure du fulm de carbone (21).

2. Pile sèche stratifiée selon la revendication 1, caractérisée en ce que ladite électrode positive (25) est un composite formé d'un mélange comprenant du dioxyde de manganèse, de chlorure d'ammonium, du noir d'acétylène, du graphite et un électrolyte contenant une solution aqueuse d'acide, ledit mélange étant comprimé et conformé en comprimé ayant une surface supérieure et une surface inférieure, et des bords latéraux; l'électrode négative (22) étant formée d'une feuille de zinc et le boîtier de protection en matière plastique (26) étant thermorétracté en place.

3. Pile sèche stratifiée selon la revendication 1 ou 2, caractérisée en ce que ledit chemisage (24) étanche à l'eau et résistant aux acides est un chemisage en matière plastique thermorétractable.

**Patentansprüche**

1. Geschichtete Trockenbatterie, bestehend aus einer Mehrzahl von übereinandergestapelten, eine Serienschaltung bildenden Trockenzellen-Enheiten (20), von denen jede Trockenzellen-Einheit gekennzeichnet ist durch folgende Merkmale:

— eine einen Elektrolyten umfassende positive Elektrode (25) ist zu einem Körper mit einer oberen, einer unteren und mit wenigstens einer Seitenfläche geformt;

— ein wasserdichter und säurebeständiger Belag (24) umfaßt die Seitenfläche oder -flächen der positiven Elektrode unter Freilassung eines zentralen Bereiches an der oberen und unteren Fläche;

— eine Papierfolie (23) grenzt an die untere Fläche der positiven Elektrode (25);

— eine negative Elektrode (22) in Form einer Folie grenzt an die Papier-folie (23);

— eine Kohleschicht (21) weist eine obere Fläche, die an die negative Elektrode grenzt, und eine untere Fläche auf und

— ein Kunststoff-Gehäuse (26) hält die positive Elektrode (26), den Belag (24), die Papierfolie (23), die negative Elektorde (22) und die Kohleschicht (21) als Laminat zusammen mit einem freien zentralen Bereich an der oberren Fläche der positiven Elektrode (25) und einem freien zentralen Bereich an der unteren Fläche der Kohleschicht (21).

2. Geschichtete Trockenbatterie nach Anspruch 1, dadurch gekennzeichnet, daß die positive Elektrode (25) ein Verbundkörper ist, bestehend aus einem Gemenge von Mangandioxid, Ammoniumchlorid, Acetylenruß, Graphit und einem Elektrolyten, der eine wässrige saure Lösung umfaßt, und daß das Gemenge gepreßt und zu einer Tablette geformt ist, die eine obere und eine untere Fläche sowie Seitenkanten umfaßt.

3. Geschichtete Trockenbatterie nach Anspruch 1 oder Anspruch 2, dadurch gekennzeichnet, daß der wasserdichte und säurefeste Belag (24) ein warmschrumpfender Kunststoff-Belag ist.

FIG. 1

FIG.2

FIG.3

FIG.4

FIG.5

FIG.6